# EUROPEAN PATENT SPECIFICATION

(11) **EP 3 391 676 B1**
(45) Date of publication and mention of the grant of the patent: **26.02.2020**
(21) Application number: 16843287.0
(22) Date of filing: 14.12.2016
(51) Int. Cl.: H04W 4/02, H04W 88/04, H04L 29/08, H04L 29/06

(54) **SYSTEM FOR REMOTELY LOCATING ANIMALS**
SYSTEM ZUR FERNORTUNG VON TIEREN
SYSTÈME DE LOCALISATION D'ANIMAUX À DISTANCE

(30) Priority: 14.12.2015 IT UB20159369
(43) Date of publication of application: 24.10.2018
(73) Proprietor: Bazzani, Chiara, 40041 Gaggio Montano (BO) (IT)
(72) Inventor: Bazzani, Sauro, 40041 Gaggio Montano (BO) (IT)
(74) Representative: Boggio, Luigi
(86) International application number: PCT/IB2016/057622
(87) International publication number: WO 2017/103816

(56) References cited:
- US-A1- 2003 151 506
- US-A1- 2006 011 144
- US-A1- 2009 289 844

## Description

### TECHNICAL FIELD

The present invention relates to a system for remotely locating animals, and in particular hounds.

### BACKGROUND ART

It is known a system for remotely locating animals, described in the European patent EP 1939646 B1. This system comprises a plurality of locating units, each of which is fastened by means of a collar to a respective hound, and at least one portable device, which is carried by a respective hunter. Each locating unit comprises a GPS receiver and a transceiver. The portable device comprises a transceiver for transmitting, on request of the hunter, a query signal addressed to a certain locating unit and for receiving a response from the locating unit. The addressed locating unit receives and identifies the query signal to determine if it is addressed to that same unit and consequently activates the GPS receiver to acquire the absolute geographical position and controls its own transceiver to transmit a response signal incorporating the acquired geographical position. The transceivers of the locating units and of the portable device operate in one or more carrier frequencies selected in a free, namely unlicensed, frequency band ensuring a coverage up to a few kilometres.

However, in usage environments particularly hostile from the point of view of the radio propagation, such as woods or forests in mountain and hill areas, the carrier frequencies and the usable transmit power do not guarantee a radio coverage sufficient to locate a pack of hounds during particularly extended hunting trips. Moreover, the portable device in the hands of the hunter is disturbed during a precarious reception, because it cannot remain stationary with respect to the intercepted signal line. Finally, in areas with major obstacles, such as a high vegetation, even worse if moist, the radio coverage is not spatially uniform, but looks patchy: the farther the locating unit, the sparser the patches.

US 2003/151506 A1 discloses a personal monitoring system comprising a portable unit that retransmits GPS signals to the monitoring unit. The location is displayed superimposed to a local area map.

### DISCLOSURE OF INVENTION

The object of the present invention is to provide a system for remotely locating hounds overcoming the aforesaid drawbacks and which, at the same time, is inexpensive and easy to produce.

In accordance with the present invention, it is provided a system for remotely locating animals, and in particular hounds, according to what is defined in the appended claims.

### BRIEF DESCRIPTION OF THE DRAWINGS

The present invention will now be described with reference to the accompanying drawings showing a nonlimiting embodiment, wherein:
- Figure 1 schematically shows the system for remotely locating animals of the present invention;
- Figure 2 shows block diagrams of two parts of the system of Figure 1;
- Figure 3 shows a block diagram of a third part of the system of Figure 1; and
- Figure 4 shows a block diagram of a further embodiment of the Figure 3.

### BEST MODE FOR CARRYING OUT THE INVENTION

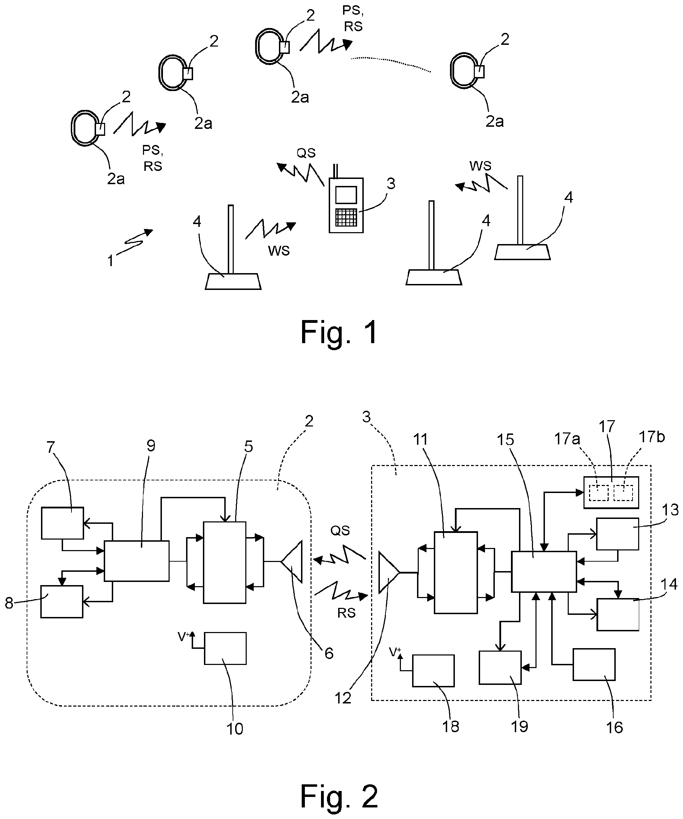

In Figure 1, the reference number 1 generally indicates, as a whole, a system for remotely locating moving animals (not shown), and in particular for locating a pack of hounds. The locating system 1 comprises a number of locating units 2 corresponding to the number of hounds to locate, each locating unit 2 being wearable by a respective hound, at least one portable device 3, and in particular a handheld device, which is carried by the hunter (not shown) and receives the geographic locations acquired and transmitted by the locating units 2, and one or more additional receiving units 4, which are independent from the portable device 3 and preferably positioned at a height for receiving the geographic locations transmitted by the locating unit 2 and retransmitting them to the portable device 3 by using the same or a different frequency band, as better explained in the following. Each locating unit 2 can be worn by the hound, and in particular comprises fastening means to be fastened to the body of the hound. For example, the fastening means consist of a collar 2a wearable by the hound.

With reference to Figure 2, each locating unit 2 comprises a radio transceiver 5, an antenna 6, which is connected to the transceiver 5 and is, for example, omnidirectional, a GPS receiver 7 to acquire the absolute geographical position of the locating unit 2, i.e. the spatial coordinates in terms of latitude, longitude and altitude where the locating unit 2 is located, and a memory 8 for storing information about the locating unit 2, including an identification code univocally associated to the locating unit 2. Moreover, each locating unit 2 comprises a control module 9 to coordinate the operation of the transceiver 5, of the GPS receiver 7 and of the memory 8 and is electrically powered by its own battery 10.

Always with reference to Figure 2, the portable device 3 comprises a radio transceiver 11 and a respective antenna 12, a GPS receiver 13 to acquire the absolute geographical position of the portable device 3, i.e. the spatial coordinates in terms of latitude, longitude and altitude where the portable device 3 is located, a memory 14 for storing position data of the locating units 2 and of the portable device 3 itself and a control module 15 for coordinating the operation of the transceiver 11, of the GPS receiver 13 and of the memory 14 and for processing the position data relating to the various locating units 2 with the position data relating to the portable device 3 so as to determine the distance of the hounds from the hunter. The portable device 3 comprises an electronic compass 16 communicating with the control module 15 so that the latter can determine the direction of the hounds in relation to the position of the hunter.

The portable device 3 comprises man-machine interface means 17, which are connected to the control module 15 and comprise a display 17a for displaying information relating to the located hounds and a keyboard 17b allowing the hunter to give commands to the portable device 3, and is electrically powered by its own battery 18.

The radio transceiver 11 and the antenna 12 of the portable device 3 are similar to the transceiver 5 and to the antenna 6 of the locating units 2. In particular, the transceivers 5 and 11 operate in one or more carrier frequencies selected in at least a first free, namely unlicensed, frequency band set by the regulations of spectrum harmonisation of the nation where the locating system 1 is used. The used carrier frequencies must ensure a coverage ranging from a few hundreds of meters to a few tens of kilometres, for example from 100 m to 50 km in open space, with a transmitted power ranging from a few tens of milliwatts to few watts, for example from 10 mW to 5 W. The unlicensed frequency bands more suitable for this purpose are substantially selected in the frequency range from 150 MHz to 950 MHz.

In the European Union, said first frequency band is selected in the group of bands comprising e.g. the 433 MHz band (LPD433), the 446 MHz band (PMR446), the bands ranging from 865 to 869 MHz, and in particular the band from 869.40 to 869.65 MHz and the band from 915 to 928 MHz. In Italy, also the band from 401 to 402 MHz and the band from 405 to 406 MHz may be used. In some countries, also the band of frequencies ranging from 151 to 155 MHz is usable without license and is often referred to as the 150 MHz band and commonly called Multi-Use Radio Service (MURS).

The transceivers 5 and 11 transmit and receive digital RF signals, for example signals modulated according to the FSK (Frequency Shift Keying), preferably according to the 2-FSK modulation.

The portable device 3 further comprises a radio communication module 19, which is controlled by the control module 15 and comprises a radio transceiver operating in one or more carrier frequencies selected in at least a second free, namely unlicensed, frequency band higher than the first frequency band to ensure a coverage up to approximately 100 m. In particular, the communication module 19 operates according to the Wi-Fi communication standard, and then the second frequency band is comprised between 2.4 and 5.5 GHz, and in particular is selected in the group of bands including the 2.4 GHz band, the 5 GHz band and the 5.4 GHz band.

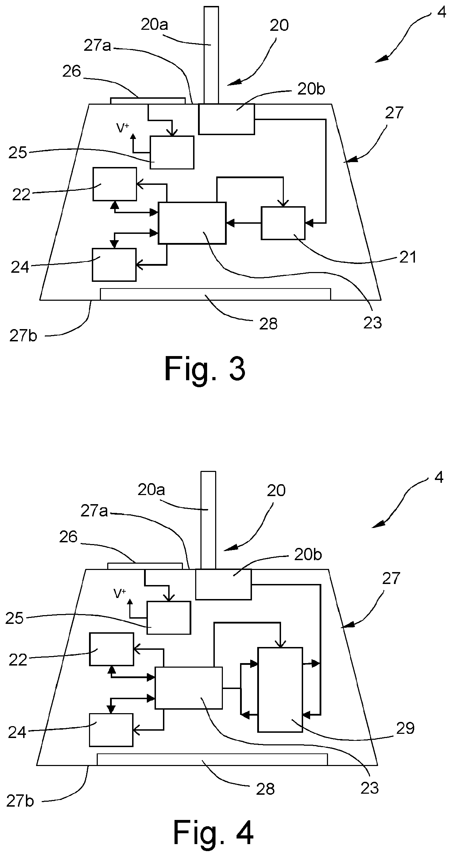

With reference to Figure 3, each additional receiving unit 4 comprises an active antenna device 20, i.e. a device comprising a common omnidirectional passive antenna 20a followed by a common signal amplifier 20b, a radio receiver 21 operating, in reception, analogously to the transceivers 5 and 11, a radio communication module 22 of the same type of the communication module 19 of the portable device 3, and a control module 23 designed to extract from the signals received in the first frequency band by the receiver 21 data relating to locating units 2 and to control the communication module 22 so as to transmit in the second frequency band signals incorporating said data that can then be received by the portable device 3 by means of its communication module 19. The additional receiving unit 4 further comprises a memory 24 for storing position data of the locating units 2 extracted from the signals received in the first frequency band.

Each additional receiving unit 4 is electrically powered by its own battery 25, which is preferably housed in the housing 27 and is preferably rechargeable and comprises, preferably, but not necessarily, a mini photovoltaic cell 26 to recharge the battery 25.

Each additional receiving unit 4 comprises a box 27 housing the amplifier 20b, the receiver 21, the communication module 22, the control module 23, the memory 24 and the battery 25. The antenna 20a is externally mounted on the box 27, for example on an upper wall 27a of the box 27, as shown in Figure 3. The mini photovoltaic cell 26 is externally fastened to the box 27, e.g. on the upper wall 27a, as shown in Figure 3, or, according to a variation not shown, in the housing 27, in correspondence of a window formed in the upper wall 27a and protected by a transparent element.

Each additional receiving unit 4 comprises fastening means comprising e.g. a permanent magnet 28 fastened to a bottom wall 27b of the box 27, preferably, but not necessarily, inside the housing 27, to secure the additional receiving unit 4 to a metal object arranged in a position higher than the one where the portable device 3 is normally arranged, for example on the roof of a car or on a metal element hanging from the branch of a tree. The lower wall 27b is flat to allow, alternatively, placing the box on any architectural element or natural relief.

Advantageously, the fastening means comprise mechanical fastening elements (not shown) to allow fastening the additional receiving unit 4 on board a flying drone which id able to fly over a relatively small area around the position where the hunter is located with the portable device 3, or to allow hanging the additional receiving unit 4 to a balloon.

In use, each locating unit 2 transmits a position signal incorporating position data comprising the identification code of the unit 2 and the geographical position acquired by the respective GPS receiver 7. The position signal is substantially generated in two modes.

According to a periodic mode, the control module 9 of each locating unit 2 periodically activates the respective GPS receiver 7 in order to acquire the geographical position and the respective transceiver 5 for transmitting via radio the position signal indicated with PS in Figure 1.

According to a demand mode, the control module 15 of the portable device 3 controls, in response to a locating request typed by the hunter on the keyboard 17b, the transceiver 11 for transmitting a query signal Qs addressed to the requested locating unit 2, i.e. a signal carrying the identification code of said locating unit 2.

The query signal QS is received and demodulated directly by the transceivers 5 of the locating unit 2. The control module 9 of the locating units 2 is designed to process the demodulated query signal QS so as to extract the identification code and, when this latter coincides with the one stored in the memory 8, to actuate the GPS receiver 7 for acquiring the geographical position and the transceiver 5 for answering to the question with the transmission of the position signal indicated with RS in Figure 1.

If there is a good radio coverage in the first frequency band between the addressed locating unit 2 and the portable device 3, then the position signal PS, RS is received and demodulated both by the transceiver 11 of the portable device 3 and by the receiver 21 of one or more additional receiving units 4.

The control module 15 of the portable device 3 is designed to process the demodulated position signal PS, RS so as to extract the position data and to store the extracted data in the memory 14. The control module 23 of the receiving units 4 is designed in the same way, to obtain and store in its memory 24 the same position data. Moreover, the control module 23 is designed to control the respective communication module 22 for transmitting in the second frequency band a position signal WS incorporating the position data just extracted from the position signal PS, RS.

With regard to the portable device 3, the communication module 19 receives and demodulates the position signal WS and the control module 15 is designed to process the demodulated position signal WS so as to extract the position data and to store the extracted data in the memory 14. The control module 15 is further designed to delete from the memory 14 any redundant position data, i.e. the data associated to a same position signal PS, RS and arrived to the portable device 3 through the position signals WS transmitted in the second frequency band by one or more additional receiving units 4.

To facilitate the elimination of redundant data, the position data embedded in the position signal PS, RS include a timestamp generated by the control module 9 of the locating unit 2 when transmitting this position signal PS, RS. Position data comprising equal values of timestamp and identification code are obviously related to a same position signal PS, RS.

The advantage of using at least one additional receiving unit 4 becomes evident when the radio coverage between the addressed locating unit 2 and the portable device 3 is not sufficient to allow the portable device 3 to have a correct reception of the position signal PS, RS. In this case, the position data transmitted by the locating unit 2 reach the portable device 3 through the replicas transmitted by the additional receiving unit 4, i.e. through the position signals WS. For this purpose, in use, the portable device 3 must not exit the radio coverage in the second frequency band guaranteed by the communication module 22 of at least one of the additional receiving units 4.

According to a further embodiment of the present invention shown in Figure 4, where corresponding elements are indicated with the same reference numbers and symbols of Figure 3, at least one of the additional receiving units 4 comprises, instead of a simple receiver 21, a transceiver 29 substantially similar to the transceivers 5 and 11. According to this embodiment, the control module 23 is designed to control the transceiver 29 so that it acts as a simple radio link to transmit a replica of each received signal originated by the portable device 3, e.g. the query signal QS, or originated by the locating unit 2, e.g. the position signals PS and RS. In this way, the radio coverage in both transmission directions between the portable device 3 and the locating units 2 is increased.

The above description clearly shows that the present invention is suited for locating animals that are not hounds and that move in vast geographical areas in contexts different from hunting, e.g. rescue dogs or livestock belonging to a grazing flock or herd.

Although the aforesaid invention makes particular reference to a very precise embodiment, it is not to be considered as limited to this embodiment, comprising within its scope all those variants, modifications or simplifications that would be apparent to the person skilled in the art, such as for example:
- fastening means for fastening the locating units different from the collar 2a, for example belts surrounding the chest or a leg of the animal;
- fastening means for fastening the additional receiving units different from the permanent magnet, for example cables or belts;
- different types of digital modulation of the signals in the first frequency band; and
- different standards of radio communication for the signals in the second frequency band.

The main advantage of the aforesaid locating system 1 is increasing the effective communication distance between the portable device 3 and the locating units 2 without having to intervene on the radio technology of the device 3 and of the units 2 thanks to the use of additional receiving units 4. The higher the number of used additional receiving units 4 and the more geographically diversified the position of such additional receiving units 4, the greater the improvement of the performances of the locating system 1. Furthermore, though using the same radio technology, the additional receiving units 4 have a reception sensitivity higher than the portable device 3, since contrary to the transceiver 11, the receiver 21 and/or the transceiver 29 are not located close to noisy electronic devices, such as for example the display 17a. The increased reception sensitivity provides a signal gain that can be estimated as approximately 7 dB.

## Claims

1. A system for remotely locating animals, and in particular hounds, the system (1) comprising: a plurality of locating units (2), each of which can be worn by a respective animal and comprises a GPS receiver (7) to acquire the geographical position of the locating unit (2) and first radio transceiver means (5) operating in at least one first frequency band to transmit a first signal (PS, RS) containing data concerning the geographical position and the identity of the locating unit (2); and at least one portable device (3), which comprises second radio transceiver means (11) operating in the first frequency band to receive the first signal (PS, RS); the system being **characterized in that** it comprises at least one additional receiving unit (4), which comprises an active antenna (20) operating in the first frequency band to receive the first signal (PS, RS), first control means (23) designed to extract said data from the first signal (PS, RS), and third radio transceiver means (22) operating in at least one second frequency band, which is higher than the first frequency band, to transmit a second signal (WS) containing the data extracted from the first signal (PS, RS); and **in that** the portable device (3) comprises fourth radio transceiver means (19) operating in the second frequency band to receive the second signal (WS).

2. A system according to claim 1, wherein said portable device (3) comprises second control means (15) designed to extract said data from the first signal (PS, RS) and from the second signal (WS) and to process the extracted data to eliminate any possible redundant data.

3. A system according to claim 1 or 2, wherein said portable device (3) comprises second control means (15), which are designed to control said second radio transceiver means (11) so as to transmit a query signal (QS) addressed to a certain locating unit (2); said additional receiving unit (4) comprising fifth radio transceiver means (29), which are coupled to said active antenna (20) and operate in said first frequency band to receive the query signal (QS) and transmit a replica thereof, so that it can be received by the addressed locating unit (2).

4. A system according to any of the claims from 1 to 3, wherein said first frequency band is an unlicensed frequency band selected in a frequency range comprised between 150 and 950 MHz.

5. A system according to any of the claims from 1 to 4, wherein said second frequency band is an unlicensed frequency band selected in a frequency range comprised between 2.4 and 5.5 GHz.

6. A system according to any of the claims from 1 to 5, wherein said third and fourth radio transceiver means (22, 19) operate according to the Wi-Fi standard.

7. A system according to any of the claims from 1 to 6, wherein said additional receiving unit (4) comprises a box (27), which houses at least said first control means (23) and said third radio transceiver means (22), and fastening means comprising a permanent magnet (28), which is fastened to a wall (27b) of the box (27).

8. A system according to any of the claims from 1 to 7, wherein said additional receiving unit (4) comprises a box (27), which houses at least said first control means (23) and said third radio transceiver means (22), a rechargeable battery (25) and a mini photovoltaic cell (26), which is designed to charge the battery and is fastened to a wall (27b) of the box (27).

## Patentansprüche

1. System zur Fernlokalisierung von Tieren, und insbesondere Hunden, wobei das System (1) umfasst: eine Mehrzahl von Lokalisierungseinheiten (2), von denen jede von jeweils einem Tier getragen werden kann und umfasst einen GPS-Empfänger (7), um die geografische Position der Lokalisierungseinheit (2) zu erfassen, und ein erstes Funksende-/Empfangsmittel (5), das in wenigstens einem ersten Frequenzband arbeitet, um ein erstes Signal (PS, RS) zu übertragen, das Daten betreffend die geografische Position und die Identität der Lokalisierungseinheit (2) enthält; und wenigstens einer tragbaren Einrichtung (3), welche ein zweites Funksende-/Empfangsmittel (11) umfasst, das in dem ersten Frequenzband arbeitet, um das erste Signal (PS, RS) zu empfangen; wobei das System **dadurch gekennzeichnet ist, dass** dieses wenigstens eine zusätzliche Empfangseinheit (4) umfasst, welche aufweist eine aktive Antenne (20), die in dem ersten Frequenzband arbeitet, um das erste Signal (PS, RS) zu empfangen, ein erstes Steuermittel (23), das so ausgebildet ist, dass dieses Daten von dem ersten Signal (PS, RS) extrahiert, und ein drittes Funksende-/Empfangsmittel (22), das in wenigstens einem zweiten Frequenzband arbeitet, welches höher als das erste Frequenzband ist, um ein zweites Signal (WS) zu übertragen, das die von dem ersten Signal (PS, RS) extrahierten Daten enthält; und dadurch, dass die tragbare Einrichtung (3) ein viertes Funksende-/Empfangsmittel (19) umfasst, das in dem zweiten Frequenzband arbeitet, um das zweite Signal (WS) zu empfangen.

2. System nach Anspruch 1, in welchem die tragbare Einrichtung (3) ein zweites Steuermittel (15) umfasst, das so ausgebildet ist, dass dieses Daten von dem ersten Signal (PS, RS) und von dem zweiten Signal (WS) extrahiert und die extrahierten Daten verarbeitet, um mögliche redundante Daten zu eliminieren.

3. System nach Anspruch 1 oder 2, in welchem die tragbare Einrichtung (3) ein zweites Steuermittel (15) umfasst, welches so ausgebildet ist, dass dieses das zweite Funksende-/Empfangsmittel (11) so steuert, dass dieses ein an eine bestimmte Lokalisierungseinheit (2) adressiertes Abfragesignal (QS) überträgt; wobei die zusätzliche Empfangseinheit (4) ein fünftes Funksende-/Empfangsmittel (29) umfasst, welches mit der aktiven Antenne (20) gekoppelt ist und in dem ersten Frequenzband arbeitet, um das Abfragesignal (QS) zu empfangen und eine Nachbildung desselben zu übertragen, so dass dieses von der adressierten Lokalisierungseinheit (2) empfangen werden kann.

4. System nach einem der Ansprüche 1 bis 3, in welchem das erste Frequenzband ein lizenzfreies Frequenzband ist, ausgewählt in einem Frequenzbereich, der zwischen 150 und 950 MHz enthalten ist.

5. System nach einem der Ansprüche 1 bis 4, in welchem das zweite Frequenzband ein lizenzfreies Frequenzband ist, ausgewählt in einem Frequenzbereich, der zwischen 2,4 und 5,5 GHz enthalten ist.

6. System nach einem der Ansprüche 1 bis 5, in welchem das dritte und vierte Funksende-/Empfangsmittel (22, 19) gemäß dem Wi-Fi-Standard arbeitet.

7. System nach einem der Ansprüche 1 bis 6, in welchem die zusätzliche Empfangseinheit (4) umfasst einen Kasten (27), welcher wenigstens das erste Steuermittel (23) und das dritte Funksende-/Empfangsmittel (22) aufnimmt, und ein einen Dauermagneten (28) umfassendes Befestigungsmittel, welches an einer Wand (27b) des Kastens (27) befestigt ist.

8. System nach einem der Ansprüche 1 bis 7, in welchem die zusätzliche Empfangseinheit (4) umfasst einen Kasten (27), welcher wenigstens das erste Steuermittel (23) und das dritte Funksende-/Empfangsmittel (22) aufnimmt, eine wiederaufladbare Batterie (25) und eine Miniphotovoltaikzelle (26), welche so ausgelegt ist, dass diese die Batterie lädt und an einer Wand (27b) des Kastens (27) befestigt ist.

## Revendications

1. Système de localisation à distance d'animaux, et en particulier de chiens de chasse, le système (1) comprenant : une pluralité d'unités de localisation (2), où chacune d'elles peut être portée par un animal respectif et comprend un récepteur GPS (7) permettant d'acquérir la position géographique de l'unité de localisation (2) et un premier moyen d'émetteur-récepteur radio (5) fonctionnant dans au moins une première bande de fréquences afin d'émettre un premier signal (PS, RS) contenant des données concernant la position géographique et l'identité de l'unité de localisation (2) ; et au moins un dispositif portable (3), lequel comprend un deuxième moyen d'émetteur-récepteur radio (11) fonctionnant dans la première bande de fréquences afin de recevoir le premier signal (PS, RS) ; le système étant **caractérisé en ce qu'**il comprend au moins une unité de réception supplémentaire (4), laquelle comprend une antenne active (20) fonctionnant dans la première bande de fréquences afin de recevoir le premier signal (PS, RS), un premier moyen de commande (23) conçu pour extraire lesdites données du premier signal (PS, RS), et un troisième moyen d'émetteur-récepteur radio (22) fonctionnant dans au moins une deuxième bande de fréquences, laquelle est plus haute que la première bande de fréquences, afin d'émettre un deuxième signal (WS) contenant les données extraites du premier signal (PS, RS) ; et **en ce que** le dispositif portable (3) comprend un quatrième moyen d'émetteur-récepteur radio (19) fonctionnant dans la deuxième bande de fréquences afin de recevoir le deuxième signal (WS).

2. Système selon la revendication 1, dans lequel ledit dispositif portable (3) comprend un deuxième moyen de commande (15) conçu pour extraire lesdites données du premier signal (PS, RS) et du deuxième signal (WS) et pour traiter les données extraites afin d'éliminer d'éventuelles données redondantes.

3. Système selon la revendication 1 ou 2, dans lequel ledit dispositif portable (3) comprend un deuxième moyen de commande (15), lequel est conçu pour commander ledit deuxième moyen d'émetteur-récepteur radio (11) de sorte à émettre un signal de requête (QS) adressé à une certaine unité de localisation (2) ; ladite unité de réception supplémentaire (4) comprenant un cinquième moyen d'émetteur-récepteur radio (29), lequel est couplé à ladite antenne active (20) et fonctionne dans ladite première bande de fréquences afin de recevoir le signal de requête (QS) et d'émettre une réplique de celui-ci, de sorte qu'elle peut être reçue par l'unité de localisation adressée (2).

4. Système selon l'une quelconque des revendications 1 à 3, dans lequel ladite première bande de fréquences est une bande de fréquences sans licence sélectionnée dans une plage de fréquences comprise entre 150 et 950 MHz.

5. Système selon l'une quelconque des revendications 1 à 4, dans lequel ladite deuxième bande de fréquences est une bande de fréquences sans licence sélectionnée dans une plage de fréquences comprise entre 2,4 et 5,5 GHz.

6. Système selon l'une quelconque des revendications 1 à 5, dans lequel lesdits troisième et quatrième moyens d'émetteur-récepteur radio (22, 19) fonctionnent selon la norme Wi-Fi.

7. Système selon l'une quelconque des revendications 1 à 6, dans lequel ladite unité de réception supplémentaire (4) comprend un boîtier (27), lequel abrite au moins ledit premier moyen de commande (23) et ledit troisième moyen d'émetteur-récepteur radio (22), et un moyen de fixation comprenant un aimant permanent (28), lequel est fixé à une paroi (27b) du boîtier (27).

8. Système selon l'une quelconque des revendications 1 à 7, dans lequel ladite unité de réception supplémentaire (4) comprend un boîtier (27), lequel abrite au moins ledit premier moyen de commande (23) et ledit troisième moyen d'émetteur-récepteur radio (22), une batterie rechargeable (25) et un mini panneau photovoltaïque (26), lequel est conçu pour charger la batterie et est fixé à une paroi (27b) du boîtier (27).
